# FASCICULE DE BREVET EUROPEEN

(11) **EP 2 912 202 B1**
(45) Date de publication et mention de la délivrance du brevet: **18.09.2019**
(21) Numéro de dépôt: 13821946.4
(22) Date de dépôt: 21.10.2013
(51) Int. Cl.: C22B 7/00, C22B 59/00, C01F 17/00

(54) **PROCÉDÉ POUR ISOLER LES TERRES RARES ET ÉLÉMENT(S) MÉTALLIQUE(S) ANNEXE(S) CONTENUS DANS LA PHASE MAGNÉTIQUE D'AIMANTS PERMANENTS**
VERFAHREN ZUR ISOLIERUNG VON SELTENEN ERDEN UND BEGLEITENTEN METALLELEMENTEN IN DER MAGNETPHASE VON PERMANENTMAGNETEN
METHOD FOR ISOLATING RARE EARTHS AND ADJACENT METAL ELEMENT(S) CONTAINED IN THE MAGNETIC PHASE OF PERMANENT MAGNETS

(30) Priorité: 24.10.2012 FR 1260130
(43) Date de publication de la demande: 02.09.2015
(73) Titulaire: Commissariat à l'Énergie Atomique et aux Énergies Alternatives, 75015 Paris (FR)
(72) Inventeur: LAUCOURNET, Richard, F-38500 La Buisse (FR); LECORRE, Céline, F-02160 Longueval-Barbonval (FR)
(74) Mandataire: Nony
(86) Numéro de dépôt international: PCT/IB2013/059502
(87) Numéro de publication internationale: WO 2014/064597

(56) Documents cités:
- EP-A1- 0 538 320
- EP-A1- 0 790 321
- JP-A- 1 183 415
- JP-A- 2009 249 674

## Description

La présente invention se rapporte à un nouveau procédé utile pour récupérer les terres rares et élément(s) métallique(s) annexe(s) contenus dans la phase magnétique d'aimants ou produits dérivés.

Le procédé de l'invention trouve une application particulièrement intéressante dans le recyclage des terres rares (TR) contenues dans des aimants à base de terres rares, comme par exemple des aimants permanents usagés, tels que des aimants de type Néodyme-Fer-Bore (Nd-Fe-B) ou Samarium-Cobalt (Sm-Co), et plus largement dans le recyclage des déchets électroniques et électriques qui contiennent ce type d'aimants.

De fait, les aimants permanents à base de TR peuvent contenir jusqu'à 35 % en poids de terres rares. Ces produits aimantés sont utilisés dans divers domaines, et notamment dans les générateurs des éoliennes, les moteurs électriques et les générateurs de certaines voitures hybrides, certains transducteurs des membranes de casques stéréo haut-de-gamme, ainsi que dans les nouvelles générations d'enceintes de sonorisation et de microphones dynamiques, ou encore dans les disques durs pour constituer le moteur qui assure le positionnement des têtes de lecture/écriture, etc..

Pour des raisons évidentes, la récupération de ces terres rares des aimants usagés présente un intérêt indéniable, que ce soit sur le plan économique, au regard du coût élevé des terres rares, ou sur le plan environnemental. En effet, l'extraction des terres rares à partir des minerais nécessite de nombreuses étapes hydrométallurgiques pour la concentration des terres rares et leur purification.

De nombreuses méthodes ont déjà été proposées pour le recyclage des terres rares présentes dans des produits usagés, aimantés ou non. Une distinction peut être réalisée entre ces procédés au regard du mode d'extraction qu'ils privilégient, à savoir par chloration ou fluoration directe des terres rares, par fusion des terres rares, par extraction des terres rares *via* un métal fondu comme l'aluminium ou le magnésium, ou encore par recyclage hydrométallurgique.

Toutefois, pour les raisons détaillées ci-après, ces modes de recyclage ne donnent pas totalement satisfaction.

Ainsi, dans le cadre de la récupération des terres rares par chloration ou fluoration directe, on peut citer par exemple le document CN 101817547, qui propose de récupérer les TR d'un aimant *via* un procédé consistant à broyer l'aimant, à ajouter à la poudre obtenue de la poudre de carbone, puis à mettre ce mélange au contact d'un flux de chlore gazeux à 400-450 °C afin de produire des chlorures de TR et un chlorure de fer volatil. Les TR sont ensuite purifiées par précipitation oxalique. Pour sa part, la demande WO 2009/119720 décrit un procédé de récupération des terres rares par immersion de l'alliage de terres rares dans un sel fondu halogéné à haute température (1300-1800°K) qui permet d'extraire les TR sous forme d'halogénures de TR gazeux. Il est clair que ces deux techniques, reposant sur une halogénation des TR, sont peu attractives compte-tenu de la dangerosité de la circulation de gaz chloré ou fluoré et des faibles cinétiques de réaction solide-gaz.

A titre représentatif du second mode de recyclage par fusion, il peut notamment être fait mention du document JP 2001-335852. Le procédé qui y est décrit repose sur le mélange de poudre d'aimants et d'un agent fluoré tel que NH₄F. L'ensemble est chauffé dans un four à arc à haute température jusqu'à la fusion. Après refroidissement, les TR sous forme d'alliage métallique se retrouvent en mélange avec un laitier et peuvent être séparées par différence de densité. La demande JP 2010-199110 fait également état d'un procédé de recyclage de ce type, appliqué à des appareils contenant des aimants à base de TR. Ce procédé consiste à chauffer, au dessous de la température de fusion de l'aimant, jusqu'à fusion partielle de l'ensemble. Dans une seconde étape, la fraction fondue est séparée du reste, puis la fraction non fondue est tamisée pour récupérer une fraction riche en alliage riche en néodyme. Toutefois, ces deux procédés présentent l'inconvénient majeur de requérir un coût énergétique important pour atteindre les températures de traitement élevées (> 1000 °C). A ce coût énergétique élevé, s'ajoute la difficulté de la séparation d'une fraction solide d'une fraction liquide.

En ce qui concerne le troisième mode de recyclage reposant sur une extraction des TR par un métal fondu, il est notamment illustré par les méthodes proposées dans la demande WO 2007/119846 et l'article Okabe et al., Direct Extraction en recovery of Neodymium Metal from Magnet Scrap. Materials Transactions, Vol. 44, No. 4, 2003 pp. 798-801.

Le document WO 2007/119846 décrit plus particulièrement un procédé comprenant l'oxydation de l'aimant par un traitement thermique, suivie de sa mise en contact avec de l'aluminium ou un alliage d'aluminium, pour initier une réaction alumino-thermique conduisant à un oxyde de TR en mélange avec un laitier et un alliage Fer-Bore qui doivent être séparés ultérieurement. Dans ce cas, la difficulté de la mise en oeuvre de cette méthode réside dans la gestion de la réaction d'alumino-thermique qui est délicate, et des risques d'emballement et d'explosivité du mélange dus notamment à la forte libération d'énergie. De plus, la séparation entre les trois fractions obtenues, oxyde de TR, laitier et alliage Fe-B, n'est pas aisée.

Quant au procédé décrit dans l'article précité, il met pour sa part à profit la forte affinité du magnésium fondu avec le néodyme, contrairement au fer. L'aimant est broyé puis placé dans la partie supérieure d'un réacteur étanche. Dans la partie inférieure du réacteur est placé du magnésium métallique. A 1090 °C, le magnésium s'évapore et vient en contact avec la poudre d'aimant. Le néodyme fond et forme un alliage avec le magnésium, tout en laissant le fer à l'état solide. Par un refroidissement dans le haut de l'installation, le magnésium chargé en néodyme se condense et retombe dans le creuset inférieur où il repasse à l'état gazeux. Le néodyme métallique est récupéré, dans une seconde étape, par évaporation sous vide du magnésium à 850-1040 °C. Toutefois, pour ce procédé, les limites sont la gestion d'un métal à l'état gazeux, la nécessité de séparer le magnésium des terres rares par distillation, ainsi que le coût énergétique requis pour l'ensemble des deux étapes thermiques du procédé.

En ce qui concerne le quatrième mode de récupération, reposant sur un recyclage hydrométallurgique, il est plus particulièrement détaillé dans les documents suivants.

Ainsi, le brevet US 5,362,459 décrit un procédé consistant à dissoudre un laitier provenant de la préparation d'alliage NdFeB par électrolyse dans un bain d'acide sulfamique (NH₂SO₃H) à 150 g/L. Au cours de l'électrolyse, le fer se dépose à la cathode. Une fois dissous, le bain chargé en ion néodyme est mélangé avec de l'acide fluorhydrique pour précipiter du fluorure de néodyme. Malheureusement, ce mode de récupération n'est pas adapté aux aimants massifs, et est particulièrement coûteux en énergie. Ce même document décrit par ailleurs un procédé de traitement des copeaux d'usinage d'aimants de type NdFeB comprenant une étape d'oxydation par de la soude, une dissolution sélective de l'aimant oxydé par de l'acide acétique afin de produire de l'acétate de néodyme, puis une fluoration de cet acétate par évaporation en fluorure avec de l'HF. Dans cette variante, la principale limite est l'oxydation très modérée de l'aimant par la soude, ainsi que la faible solubilité des TR dans l'acide acétique qui présente certes une certaine sélectivité, mais qui est trop lente pour envisager de traiter des volumes importants d'aimants.

Le document WO 96/00698 propose une alternative au procédé décrit dans le document US 5,362,459, en réalisant l'oxydation de l'aimant par un traitement thermique et une dissolution de la poudre oxydée par HCl. La séparation Fe-Nd se fait par précipitation oxalique de l'oxalate de Nd qui présente une solubilité très inférieure à l'oxalate de fer. Pour ce mode de recyclage, un traitement d'oxydation thermique est requis et représente donc un coût non négligeable.

Le document RU 2382735 propose, pour sa part, un procédé de récupération des TR basé sur la dissolution des aimants par un mélange de tributylphosphate et de tétrachloroéthylène saturé en chlorure. Une solution aqueuse de fluorure de métaux alcalins est préparée, et ajoutée à la solution organique pour précipiter un fluorure de TR. Cependant, l'utilisation du tétrachloroéthylène est aujourd'hui proscrite.

Par ailleurs, la demande TW 200742621 décrit un procédé basé sur une démagnétisation des aimants à 350 °C, leur broyage (<50 Mesh -300 µm) et leur immersion dans l'acide sulfurique concentré (3N) en vue d'imprégner l'aimant par l'acide. Cette dernière opération est assistée par l'application d'ultra-sons permettant la dissolution du néodyme, du fer et du bore. Une première précipitation est alors réalisée pour récupérer un hydroxyde de néodyme. Puis une seconde précipitation est effectuée pour obtenir un hydroxyde de fer. Dans ce procédé, plusieurs limites sont toutefois à souligner. Tout d'abord, la difficulté à broyer les aimants pour atteindre la distribution granulométrique mentionnée (50 Mesh), notamment en présence du revêtement métallique anticorrosion qui recouvre généralement les aimants, puis la difficulté de réaliser la dissolution, et enfin la récupération du Nd sous forme d'hydroxyde, qui conduit le plus souvent à une pureté dégradée du produit de par l'entrainement des polluants (Fe et B) lors de la précipitation de ce gel.

Enfin, le document RU 2097330 propose un procédé basé sur un traitement thermique de l'aimant compris entre 80 et 700 °C, puis une dissolution à l'acide nitrique. La solution d'acide nitrique, contenant les éléments Fe, B et Nd, est ensuite mise au contact d'une solution organique contenant du tributylphényle (TBP), un extractant connu dans l'extraction par solvant. Après une série d'étapes d'extraction, le néodyme peut être récupéré sous la forme d'une solution de nitrate. Dans cette voie, la solution organique est le plus souvent composée d'un solvant à base de benzène ou de toluène, ces derniers étant considérés comme toxiques. Par ailleurs, ce procédé présente l'inconvénient de requérir de nombreuses étapes d'extraction successives pour séparer les éléments les uns des autres.

Quant au document JP 2009 249674, il propose un procédé de récupération des terres rares requérant l'oxydation du matériau métallique à l'état de poudre par chauffage sous une atmosphère oxydante, suivi de la mise en solution de cette poudre oxydée, en milieu acide, puis son alcalinisation par chauffage. Les terres rares sont récupérées en solution. Ce procédé a donc pour inconvénient de réaliser la réaction d'oxydation sur la poudre métallique en tant que telle et de requérir un traitement thermique sous atmosphère oxydante.

En conséquence, au regard de ce qui précède, il apparait que les techniques de recyclages des terres rares actuellement disponibles ne donnent pas totalement satisfaction, dans la mesure où elles s'avèrent, pour certaines, prohibitives en terme de coût, non conformes aux exigences de santé public ou de normes environnementales notamment au regard du caractère toxique de certains réactifs qu'elles requièrent, ou encore non transposables à l'échelle industrielle.

La présente invention vise précisément à proposer un nouveau procédé permettant de pallier au moins en partie les inconvénients précités.

Ainsi, la présente invention concerne un procédé utile pour isoler les terres rares et élément(s) métallique(s) annexe(s) distinct(s) des terres rares contenus dans la phase magnétique d'aimants ou produits dérivés, comprenant au moins les étapes consistant en :
(i) disposer du matériau formant ladite phase magnétique sous la forme d'une poudre démagnétisée, de granulométrie moyenne inférieure ou égale à 700 µm et dénuée de contamination avec des particules non constitutives de ladite phase magnétique ;
(ii) dissoudre ladite poudre de l'étape (i) en milieu acide supplémenté avec au moins un agent oxydant apte à ajuster l'(les) élément(s) métallique(s) annexe(s) à un état d'oxydation compatible avec leur précipitation consécutive en étape (iii), en présence d'ions hydroxyde, à un pH strictement inférieur à 7 ;
(iii) précipiter l'(les) élément(s) métallique(s) annexe(s) à l'état d'hydroxyde *via* l'ajout à ladite solution obtenue à l'issue de l'étape (ii) d'une quantité efficace d'au moins une base hydroxylée, dans des conditions de pH propices au maintien des éléments terres rares sous forme solubilisée ;
(iv) isoler le précipité d'hydroxyde métallique formé à l'issue de l'étape (iii) et, le cas échéant, le récupérer ;
(v) précipiter les éléments terres rares à l'état d'oxalate dans la solution appauvrie, voire dénuée, en élément(s) métallique(s) annexe(s) et obtenue à l'issue de l'étape (iv), *via* l'ajout à ladite solution d'une quantité efficace en acide oxalique ; et
(vi) récupérer lesdites terres rares à l'état de précipité d'oxalate de terres rares.

On désignera plus simplement dans la suite du texte par « élément(s) métallique(s) », l'(les) élément(s) métallique(s) (par exemple, fer, cobalt, zirconium), distinct(s) des éléments terres rares et qui sont contenus, conjointement aux terres rares, dans le matériau magnétique à traiter.

Selon le matériau magnétique à traiter, il peut s'agir d'un unique élément métallique ou d'un mélange de plusieurs éléments métalliques.

Egalement, on parlera du « matériau magnétique », ou encore du « matériau à traiter », pour désigner le matériau formant ladite phase magnétique de l'aimant ou produit dérivé et qui contient les terres rares et élément(s) métallique(s) annexe(s).

Par « terres rares », on entend désigner l'ensemble des terres rares présentes dans le matériau magnétique. Il s'agit généralement d'un mélange de terres rares. Par exemple, par l'appellation usuelle « Néodyme-Fer-Bore », on sous-entend en fait un mélange de néodyme et praséodyme, ainsi que d'autres terres rares ajoutées en tant qu'additifs permettant d'améliorer les propriétés magnétiques telles que l'europium ou le dysprosium.

Par « aimants ou produits dérivés », on entend désigner, de manière générale, les aimants à base de terres rares, en particulier des aimants permanents, notamment de type Néodyme-Fer-Bore ou Samarium-Cobalt, mais également tout produit comprenant une phase magnétique renfermant terres rares et élément(s) métallique(s) annexe(s), tels que les rebuts, de type poudres, copeaux ou éléments massifs, issus du procédé de fabrication des aimants, par exemple provenant des opérations d'usinage ou de mise en forme.

Le procédé de l'invention convient aussi bien pour le traitement des aimants usagés provenant des déchets d'équipements électriques et électroniques (DEEE), des rebuts de production d'aimants permanents (copeaux, éléments massifs) ou encore des aimants usagés pouvant provenir des moteurs électriques ou autres moteurs industriels.

Selon un mode de réalisation particulier, le procédé de l'invention est mis en oeuvre pour isoler les terres rares et/ou le fer, en particulier le néodyme et/ou le fer, contenus par exemple dans la phase magnétique d'aimants de type Néodyme-Fer-Bore.

Selon un autre mode de réalisation particulier, le procédé de l'invention est mis en oeuvre pour isoler les terres rares et/ou le cobalt, en particulier le samarium et/ou le cobalt, contenus par exemple dans la phase magnétique d'aimants de type Samarium-Cobalt.

Comme développé dans la suite du texte, la poudre de matériau magnétique peut être aisément obtenue à partir du produit aimanté, éventuellement enrobé de son revêtement de protection, *via* un procédé mettant en oeuvre un traitement d'hydruration-déshydruration.

Le procédé de l'invention s'avère, en outre, particulièrement avantageux à plusieurs titres.

Tout d'abord, comme illustré dans l'exemple qui suit, il permet de récupérer l'ensemble des terres rares contenues dans la phase magnétique d'un aimant, avec un rendement de récupération élevé, en particulier supérieur à 95 %.

Egalement, de manière avantageuse, la mise en oeuvre selon le procédé de l'invention d'une étape de dissolution de la poudre de matériau magnétique dans un milieu acide oxydant (H₂O₂, NaS, eau de Javel) permet d'éviter un traitement thermique d'oxydation couteux et moins efficace.

Par ailleurs, les inventeurs ont découvert que la séparation, au préalable, du ou des éléments métalliques par précipitation d'hydroxyde permet avantageusement de limiter l'ajout d'acide oxalique pour récupérer les terres rares, et d'accroître le rendement de récupération.

Egalement, la précipitation oxalique selon le procédé de l'invention permet de récupérer les terres rares avec une pureté élevée, notamment supérieure à 99 %, et en particulier supérieure à celle obtenue par des méthodes de précipitation des terres rares sous forme d'hydroxyde.

Ainsi, selon un autre de ses aspects, la présente invention vise l'utilisation d'un procédé tel que défini précédemment pour le recyclage des terres rares contenues dans des aimants ou produits dérivés.

Qui plus est, le procédé de l'invention permet non seulement d'isoler les terres rares, mais également de récupérer les éléments métalliques annexes présents dans le matériau aimanté, avec des rendements élevés, en particulier proches de 100 %. Ces éléments métalliques peuvent ainsi être valorisés dans différentes filières (pigments, sidérurgie, etc.).

D'autres caractéristiques, variantes et avantages du procédé selon l'invention ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### POUDRE DE MATERIAU MAGNETIQUE

Comme évoqué précédemment, une première étape du procédé de l'invention consiste à disposer du matériau renferment terres rares et élément(s) métallique(s) annexe(s) sous la forme d'une poudre de granulométrie moyenne inférieure ou égale à 700 µm.

De préférence, ladite poudre présente une granulométrie moyenne inférieure ou égale à 500 µm, notamment allant de 10 à 500 µm, en particulier inférieure ou égale à 200 µm, plus particulièrement inférieure à 100 µm, notamment inférieure à 50 µm.

Selon un mode de réalisation particulier, ladite poudre possède une granulométrie d'environ 30 µm.

La granulométrie peut être mesurée par exemple par granulométrie laser ou par tamisage selon une technique connue de l'homme du métier.

Cette poudre est démagnétisée et dénuée de contamination avec des particules non constitutives de ladite phase magnétique, comme par exemple résultant du revêtement de protection de l'aimant.

La poudre de l'étape (i) peut être obtenue à partir d'un matériau magnétique sous forme massive *via* un traitement d'hydruration-déshydruration.

Le traitement d'hydruration-déshydruration permet avantageusement de conduire à une poudre très fine, en particulier de granulométrie moyenne inférieure ou égale à 700 µm, en particulier inférieure ou égale à 500 µm.

D'une manière générale, les produits aimantés présentent un revêtement de protection de type alliage métallique, disposé en surface du matériau magnétique, comme par exemple un revêtement composé de nickel, de cuivre, ou autres alliages de protection contre l'oxydation.

Comme développé ci-dessous, les inventeurs ont découvert qu'il est possible, d'isoler, de manière aisée, le matériau magnétique sous forme de poudre fine, de son revêtement de protection, en mettant en oeuvre un traitement d'hydruration-déshydruration.

Plus particulièrement, la poudre de matériau magnétique en étape (i) peut être préparée selon un procédé comprenant au moins les étapes consistant en :
(a) disposer du produit aimanté formé du matériau magnétique sous forme massive et, le cas échéant, d'un revêtement de protection de type alliage métallique disposé en surface dudit matériau magnétique ;
(b) si nécessaire, démagnétiser le matériau à traiter ;
(c) si existant, fissurer ledit revêtement de protection ;
(d) promouvoir la fragmentation dudit matériau magnétique sous la forme de particules de taille moyenne inférieure ou égale à 700 µm, en particulier inférieure ou égale à 500 µm, par exposition à un traitement d'hydruration-déshydruration ; et
(e) récupérer la poudre formée des particules dérivant de la fragmentation du matériau magnétique, sous une forme isolée des fragments du revêtement de protection.

La démagnétisation en étape (b) est de préférence opérée *via* un traitement thermique à une température inférieure à 350 °C, en particulier à une température allant de 80 à 250 °C. En effet, l'aimantation peut diminuer très rapidement par chauffage bien en dessous de la température de Curie qui se situe, par exemple pour les aimants dits NdFeB, autour de 280 °C. Cette démagnétisation est souhaitable pour simplifier la manipulation du produit aimanté.

Le revêtement de protection peut être fissuré en étape (c) par simple déchiquetage mécanique du produit désaimanté préalablement, par exemple en fracturant l'aimant au moyen d'un broyeur à marteau. Cette étape vise à ouvrir le revêtement de protection, à des fins de permettre à l'hydrogène, mis en oeuvre lors du traitement d'hydruration-déshydruration, d'accéder au matériau magnétique.

Il appartient à l'homme du métier d'opérer le traitement d'hydruration-déshydruration en étape (d) dans des conditions propices à la fragmentation du matériau magnétique sous forme de poudre fine.

Un tel traitement d'hydruration-déshydruration est connu de l'homme du métier, et a déjà été proposé à des fins de produire des matériaux à haute propriété magnétique, sous forme pulvérulente, par exemple dans les documents EP 0 173 588 et EP 0 538 320.

Ce traitement d'hydruration-déshydruration n'affecte pas le revêtement de protection de type alliage métallique.

D'une manière générale, le traitement d'hydruration-déshydruration est réalisé au sein d'un réacteur étanche et consiste, dans un premier temps, à mettre le matériau magnétique au contact d'hydrogène (étape d'hydruration), en injectant de l'hydrogène à température ambiante dans le réacteur. Sans vouloir être lié par la théorie, la phase magnétique, au contact de l'hydrogène, va connaître un gonflement conduisant à la fragilisation du matériau aimanté massif.

Dans un second temps, l'hydrogène du réacteur est retiré et peut être avantageusement recyclé. Un traitement thermique du matériau, par exemple aux environs de 200 °C, permet de déshydrurer la phase préalablement hydrurée. L'hydrogène dégagé lors de cette dernière étape peut alors être capté et également recyclé.

A titre d'exemple, pour un matériau magnétique de type terres rares-Fer-Bore, on peut représenter les deux étapes successives d'hydruration et déshydruration par les réactions schématiques suivantes :

2 TR₂Fe₁₄B + xH₂ -> 2 TR₂Fe₁₄BHₓ

*(hydruration)* ; et

2 TR₂Fe₁₄BHₓ -> 2 TR₂Fe₁₄B + xH₂

*(déshydruration).*

Dans le cas d'un produit aimanté présentant un revêtement de protection, la poudre fine de matériau magnétique obtenue à l'issue du traitement d'hydruration-déshydruration peut être aisément isolée en étape (e) des fragments de taille supérieure dérivant du revêtement de protection.

Cette séparation peut être opérée par simple tamisage, par exemple à l'aide d'un tamis vibrant de taille de pores de 2 mm. L'alliage métallique composant le revêtement est récupéré à l'issue du tamisage, et peut être facilement recyclé dans des filières prévues à cet effet.

Enfin, cette méthode de préparation de la poudre de matériau magnétique permet avantageusement d'isoler le matériau magnétique de son revêtement avec un rendement élevé, en particulier supérieur à 95 %.

Egalement, cette méthode ne requiert pas de traitement chimique pour décaper le revêtement et, par conséquent, n'induit pas de pollution de la solution préparée en étape (ii) par les éléments du revêtement (tels que Ni, Cu, Cr).

Un tel traitement conduit à une poudre très fine, en particulier de granulométrie inférieure à 700 µm, en particulier inférieure à 500 µm, ne nécessitant pas de traitement mécanique additionnelle avant sa mise en oeuvre dans le procédé de l'invention.

### DISSOLUTION DE LA POUDRE EN MILIEU ACIDE OXYDANT

Dans une seconde étape du procédé de l'invention, la poudre de l'étape (i) est dissoute dans un milieu acide supplémenté avec au moins un agent oxydant apte à ajuster l'(les) élément(s) métallique(s) annexe(s) à un état d'oxydation compatible avec leur précipitation consécutive en étape (iii), en présence d'ions hydroxyde, à un pH strictement inférieur à 7.

De préférence, la poudre de matériau magnétique est introduite dans ledit milieu acide oxydant à raison de 1 à 20 % massique.

Le milieu acide peut comprendre un ou plusieurs acides, de préférence choisis parmi l'acide chlorhydrique, l'acide sulfurique et leur mélange, en particulier à une concentration comprise entre 0,1 et 5 mol/L, plus particulièrement entre 0,5 et 2 mol/L.

Le milieu acide oxydant peut être préalablement préparé par ajout d'un ou plusieurs agents oxydants adéquats à une solution acide.

De manière particulièrement avantageuse, les inventeurs ont découvert que l'ajout d'un agent oxydant, même en faible concentration, au milieu acide permet une dissolution efficace du matériau magnétique, sans nécessiter d'oxydation thermique.

Selon un mode de réalisation particulier, ledit milieu acide oxydant est agité à l'aide d'un système de brassage, tel que, par exemple, par brassage magnétique, brassage par table vibrante, etc.. Un tel brassage permet d'accélérer la dissolution de la poudre de matériau magnétique dans ledit milieu acide oxydant.

Il appartient à l'homme du métier d'adapter la composition du milieu acide oxydant, notamment au regard de la nature et de la quantité de poudre de matériau magnétique à dissoudre.

Le ou lesdits agents oxydants peuvent être choisis parmi H₂O₂, NaS et NaClO (eau de Javel), et leurs mélanges.

Le ou lesdits agents oxydants peuvent être mis en oeuvre en une teneur inférieure ou égale à 5 % volumique, en particulier allant de 0,5 à 5 % volumique, de préférence de l'ordre de 1 % volumique, par rapport au volume total dudit milieu acide.

L'agent oxydant mis en oeuvre selon l'invention est choisi de manière à permettre d'amener l'(les) élément(s) métallique(s) annexe(s) à un état d'oxydation (encore appelé « degré d'oxydation »), tel que le ou lesdits élément(s) métallique(s) dans cet état d'oxydation est(sont) apte(s) à précipiter en présence d'ions hydroxyde à un pH strictement inférieur à 7, de préférence inférieur à 5, de préférence inférieur ou égal à 3.

Les valeurs de pH de précipitation des différents états d'oxydation pour un élément métallique donné sont connues de l'homme du métier ou peuvent être aisément déduites d'essais de précipitation en présence d'ions hydroxyde.

Le choix de l'agent oxydant au regard de la nature de l'élément métallique, et plus particulièrement de l'état d'oxydation souhaité, relève des connaissances générales de l'homme du métier.

Selon un mode de réalisation particulier, dans le cas de la mise en oeuvre du procédé de l'invention pour isoler les terres rares du fer, l'agent oxydant est choisi de manière à permettre l'oxydation du fer en fer (III).

L'agent oxydant peut être par exemple H₂O₂.

A titre d'exemple, une poudre de Néodyme-Fer peut être dissoute dans une solution d'acide chlorhydrique 2N supplémenté avec 1 % volumique de H₂O₂.

Selon un autre mode de réalisation particulier, dans le cas de la mise en oeuvre du procédé de l'invention pour isoler les terres rares du cobalt, l'agent oxydant est choisi de manière à permettre l'oxydation du cobalt en cobalt (III).

L'agent oxydant peut être par exemple de l'eau de javel (NaClO).

### PRECIPITATION DU OU DES ELEMENT(S) METALLIQUE(S) ANNEXE(S)

Selon une troisième étape (iii) du procédé de l'invention, une quantité efficace de base hydroxylée est ajoutée à la solution obtenue à l'issue de l'étape (ii) pour précipiter le ou lesdits élément(s) métallique(s) annexe(s) à l'état d'hydroxyde, dans des conditions de pH propices au maintien des terres rares sous forme solubilisée.

La base hydroxylée ajoutée peut être par exemple choisie parmi NaOH, NH₄OH, KOH et autres bases organiques hydroxylées.

Par « quantité efficace », on entend une quantité minimale nécessaire à l'obtention de l'effet attendu, autrement dit, dans le cas présent, une quantité suffisante pour induire la précipitation du ou des élément(s) métallique(s) annexe(s) à l'état d'hydroxyde, sans affecter la solubilité des éléments terres rares.

Il appartient à l'homme du métier d'ajuster cette quantité au regard du pH souhaité pour précipiter l'(les) élément(s) métallique(s) sous forme d'hydroxyde, sans précipiter les terres rares.

De préférence, à l'issue de l'étape (iii), plus de 90 % de la quantité totale des terres rares restent en solution, de préférence au moins 95 %.

Le pH de la solution en étape (iii) est plus particulièrement ajusté à une valeur strictement inférieure à 7, en particulier allant de 0,8 à 7, de préférence inférieure à 5, et plus préférentiellement inférieure ou égale à 3.

Selon un mode de réalisation particulier, dans le cas de la mise en oeuvre du procédé de l'invention pour isoler les terres rares du fer, le pH de la solution en étape (iii) pour la précipitation du fer est de préférence ajusté à une valeur d'environ 2,5.

Selon un autre mode de réalisation particulier, dans le cas de la mise en oeuvre du procédé de l'invention pour isoler les terres rares du cobalt, le pH de la solution en étape (iii) pour la précipitation du cobalt est avantageusement ajusté à une valeur d'environ 3.

Dans une étape (iv) du procédé de l'invention, le précipité d'hydroxyde métallique formé à l'issue de l'étape (iii) est isolé du reste de la solution, par exemple par filtration.

Le précipite d'hydroxyde métallique peut être ainsi récupéré pour être recyclé dans différentes filières (pigments, sidérurgie, etc.).

La solution résultante de l'élimination du précipité d'hydroxyde métallique, obtenue à l'issue de l'étape (iv), est donc une solution appauvrie en élément(s) métallique(s) annexe(s) et, de préférence, en est totalement dénuée.

Selon un mode de réalisation particulier, le procédé de l'invention comprend en outre, préalablement à l'étape suivante (v), une ou plusieurs étape(s) de lavage, notamment avec de l'eau, du précipité d'hydroxyde métallique isolé en étape (iv) et d'incorporation des eaux de lavage à la solution appauvrie, voire dénuée, en élément(s) métallique(s) annexe(s) obtenue à l'issue de l'étape (iv).

Cette étape permet de récupérer la faible quantité de terres rares qui aurait éventuellement été entraînée avec la précipitation de l'hydroxyde métallique en étape (iii).

### PRECIPITATION DES ELEMENTS TERRES RARES

Selon une étape (v) du procédé de l'invention, un quantité efficace d'acide oxalique est ajoutée à la solution appauvrie, voire dénuée, en élément(s) métallique(s) annexe(s) pour précipiter les éléments terres rares à l'état d'oxalate.

De même que précédemment, par « quantité efficace », on entend une quantité minimale nécessaire à l'obtention de l'effet attendu, autrement dit dans le cas présent, une quantité suffisante pour induire la précipitation de la totalité des terres rares à l'état d'oxalate.

L'ajustement de cette quantité relève des compétences de l'homme de l'art, notamment au regard de la quantité en terres rares à récupérer dans la solution obtenue à l'issue de l'étape (iv).

Néanmoins, d'une manière générale, l'acide oxalique est ajouté en une teneur inférieure ou égale à 10 mol/L, en particulier à raison de 0,01 à 5 mol/L.

La quantité d'acide oxalique est telle qu'elle permet ainsi d'induire la réaction schématisée ci-dessous :

2 TR + 3 C₂H₃O₂ -> TR₂(O₂C₂H₃)₂ (s)

L'invention va maintenant être décrite au moyen des exemples et figures suivants, donnés à titre illustratif et non limitatif de l'invention.

### FIGURES

Figure 1 : représentation graphique des variations de température et de pression lors de l'étape de déshydruration du traitement d'hydruration-déshydruration mis en oeuvre en exemple 1 ;
Figure 2 : représentation graphique des variations des taux de précipitation du fer (III) (-◊-) et de néodyme (-■-) sous forme d'hydroxyde en fonction du pH ; et
Figure 3 : analyse thermogravimétrique du produit (oxalate de néodyme) obtenu selon le procédé de l'invention en exemple 1.

### EXEMPLE 1

### Poudre du matériau magnétique

Un aimant usagé de type Nd-Fe-B de 6 g est porté à 80 °C pendant 5 heures dans une étuve placée à 200 °C. A la suite de ce traitement, son aimantation a considérablement diminuée et il peut être manipulé aisément.

L'aimant est ensuite fracturé au moyen d'un broyeur à marteau. Cette opération permet d'ouvrir le revêtement pour accéder au coeur de l'aimant.

### Traitement d'hydruration-déshydruration

L'ensemble est placé dans un conteneur étanche permettant d'être alimenté en dihydrogène. Après un vide primaire, l'hydrogène est envoyé dans le conteneur. Le contact avec l'aimant produit une hydruration de la phase principale de l'aimant. Cette réaction est exothermique. Par conséquent, l'alimentation en H₂ est progressive pour ne pas dépasser 40 °C.

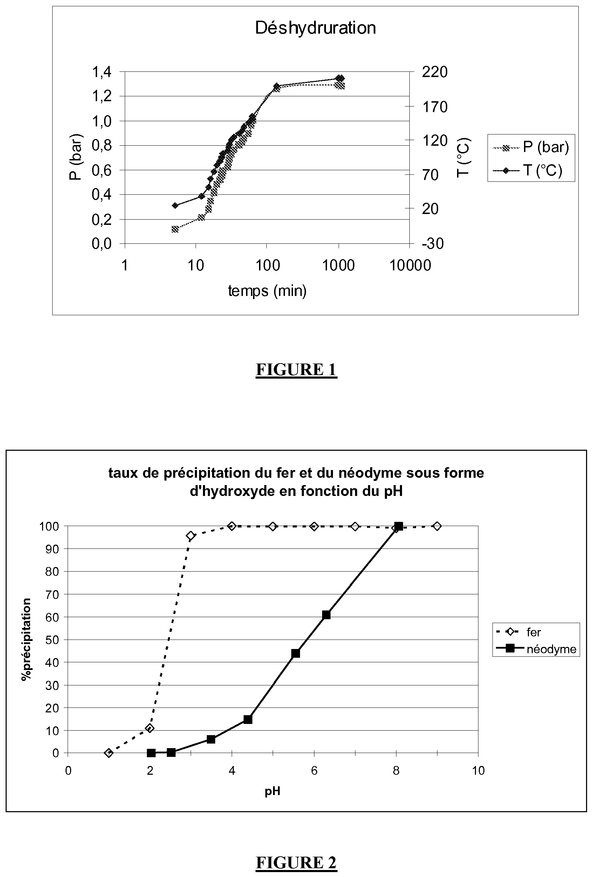

Une fois la réaction totale effectuée, la température revient à l'ambiante naturellement. Un vide primaire est alors effectué avant la déshydruration. Celle-ci est effectuée par une remontée de la température progressive jusqu'à 200 °C. Avec l'augmentation de la température, l'hydrogène est libéré comme en témoigne la figure 1.

A l'issue de la déshydruration, la poudre de matériau magnétique est récupérée à l'aide d'un tamis vibrant de taille de pore de 700 µm. La poudre obtenue présente une granulométrie moyenne (d50), mesurée par granulométrie laser, de 50 µm.

390 mg de revêtement sont récupérés.

### Dissolution de la poudre en milieu acide oxydant

La poudre récoltée (5,61 g) est dissoute dans 50 ml d'HCl 2N contenant 1 % vol de H₂O₂. Après 2 heures sous agitation, l'ensemble est solubilisé.

### Précipitation de l'élément fer à l'état d'hydroxyde

On ajoute progressivement de la soude (2N) jusqu'à pH=2,5.

En effet, comme illustré en figure 2, un tel pH permet d'assurer la précipitation de l'hydroxyde de fer (III) sans affecter la solubilisation des terres rares. En dessous de pH 2,5, la quantité de fer en solution est trop importante, au-delà de pH 2,5, le néodyme précipite et le rendement final risque de diminuer.

Dès les premières gouttes, un précipité est observé. Ce précipité est ensuite récupéré par filtration, lavé et séché à 100 °C. La masse de Fer récupéré est de 6,9 g. L'analyse chimique réalisée sur ce composé confirme bien un hydroxyde de Fer(III). La masse obtenue représente 94,5 % du Fer présent initialement dans l'aimant.

### Précipitation des éléments TR

Par la suite, on verse progressivement dans la solution restante une solution d'acide oxalique à 1 mol/L. On observe alors un précipité.

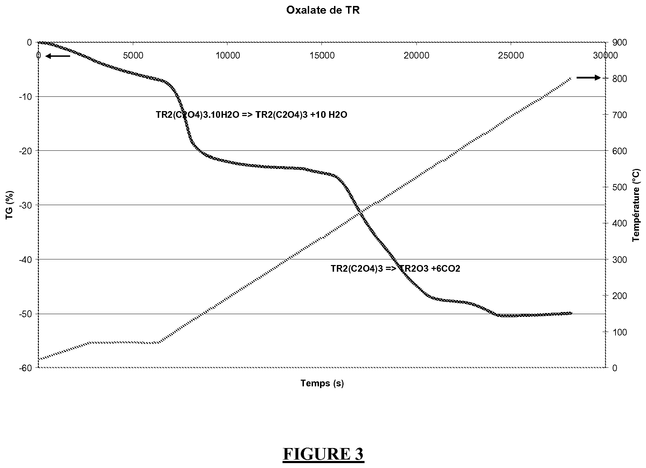

Après filtration et séchage à 60 °C, une masse de 8,7 g est récupérée. Une analyse thermogravimétrique (figure 3) confirme l'hydratation du composé par 10 moles d'eau typique des oxalates de terres rares. Le rendement de récupération des terres rares sous forme d'oxalate est estimé à 90,7 %.

## Revendications

1. Procédé utile pour isoler les terres rares et élément(s) métallique(s) annexe(s) distinct(s) des terres rares contenus dans la phase magnétique d'aimants ou produits dérivés, comprenant au moins les étapes consistant en :
(i) disposer du matériau formant ladite phase magnétique sous la forme d'une poudre démagnétisée, de granulométrie moyenne inférieure ou égale à 700 µm et dénuée de contamination avec des particules non constitutives de ladite phase magnétique ;
(ii) dissoudre ladite poudre de l'étape (i) en milieu acide supplémenté avec au moins un agent oxydant apte à ajuster l'(les) élément(s) métallique(s) annexe(s) à un état d'oxydation compatible avec leur précipitation consécutive en étape (iii), en présence d'ions hydroxyde, à un pH strictement inférieur à 7;
(iii) précipiter l'(les) élément(s) métallique(s) annexe(s) à l'état d'hydroxyde *via* l'ajout à ladite solution obtenue à l'issue de l'étape (ii) d'une quantité efficace d'au moins une base hydroxylée, dans des conditions de pH propices au maintien des éléments terres rares sous forme solubilisée ;
(iv) isoler le précipité d'hydroxyde métallique formé à l'issue de l'étape (iii) et, le cas échéant, le récupérer ;
(v) précipiter les éléments terres rares à l'état d'oxalate dans la solution appauvrie, voire dénuée, en élément(s) métallique(s) annexe(s) et obtenue à l'issue de l'étape (iv), *via* l'ajout à ladite solution d'une quantité efficace en acide oxalique ; et
(vi) récupérer lesdites terres rares à l'état de précipité d'oxalate de terres rares.

2. Procédé selon la revendication 1, dans lequel la poudre en étape (i) possède une granulométrie moyenne allant de 10 à 500 µm, en particulier inférieure ou égale à 200 µm, plus particulièrement inférieure à 100 µm, notamment inférieure à 50 µm et plus particulièrement d'environ 30 µm.

3. Procédé selon la revendication 1 ou 2, dans lequel ledit milieu acide oxydant de l'étape (ii) comprend un ou plusieurs acides choisis parmi l'acide chlorhydrique, l'acide sulfurique et leur mélange.

4. Procédé selon l'une quelconque des revendications précédentes, dans lequel ledit agent oxydant est choisi parmi H₂O₂, NaS, NaClO, et leurs mélanges.

5. Procédé selon l'une quelconque des revendications précédentes, dans lequel ladite base hydroxylée ajoutée en étape (iii) est choisie parmi NaOH, NH₄OH, KOH et autres bases organiques hydroxylées.

6. Procédé selon l'une quelconque des revendications précédentes, dans lequel le pH de la solution est ajusté en étape (iii) à une valeur strictement inférieure à 7, en particulier allant de 0,8 à 7, de préférence inférieure à 5, et plus préférentiellement inférieure ou égale à 3.

7. Procédé selon l'une quelconque des revendications précédentes, pour isoler les terres rares et le fer, en particulier le néodyme et le fer, contenus notamment dans la phase magnétique d'un aimant de type Néodyme-Fer-Bore.

8. Procédé selon la revendication précédente, dans lequel le milieu acide en étape (ii) est supplémenté avec au moins un agent oxydant apte à oxyder le fer sous forme fer (III), en particulier avec H₂O₂.

9. Procédé selon l'une quelconque des revendications 1 à 6, pour isoler les terres rares et le cobalt, en particulier le samarium et le cobalt, contenus notamment dans la phase magnétique d'un aimant de type Samarium-Cobalt.

10. Procédé selon la revendication précédente, dans lequel le milieu acide en étape (ii) est supplémenté avec au moins un agent oxydant apte à oxyder le cobalt sous forme cobalt (III), en particulier avec NaClO.

11. Procédé selon l'une quelconque des revendications précédentes, comprenant, préalablement à l'étape (v), une ou plusieurs étape(s) de lavage du précipité d'hydroxyde métallique isolé en étape (iv) et d'incorporation des eaux de lavage à la solution appauvrie, voire dénuée, en élément(s) métallique(s) annexe(s) obtenue à l'issue de l'étape (iv).

12. Procédé selon l'une quelconque des revendications précédentes, dans lequel la poudre de l'étape (i) est obtenue à partir d'un matériau magnétique sous forme massive *via* un traitement d'hydruration-déshydruration.

13. Procédé selon l'une quelconque des revendications précédentes, dans lequel ladite poudre de matériau magnétique en étape (i) est formée à partir d'un produit aimanté *via* au moins les étapes consistant en :
(a) disposer du produit aimanté formé du matériau magnétique sous forme massive et, le cas échéant, d'un revêtement de protection de type alliage métallique disposé en surface dudit matériau magnétique ;
(b) si nécessaire, démagnétiser le matériau à traiter, notamment par exposition à un traitement thermique à une température inférieure à 350 °C ;
(c) si existant, fissurer ledit revêtement de protection, en particulier par déchiquetage mécanique du produit ;
(d) promouvoir la fragmentation dudit matériau magnétique sous la forme de particules de taille moyenne inférieure ou égale à 700 µm, par exposition à un traitement d'hydruration-déshydruration ; et
(e) récupérer la poudre formée des particules dérivant de la fragmentation du matériau magnétique, sous une forme isolée des fragments du revêtement de protection, en particulier par tamisage.

14. Utilisation d'un procédé tel que défini selon l'une quelconque des revendications 1 à 13 pour le recyclage des terres rares contenues dans des aimants ou produits dérivés.

## Patentansprüche

1. Verfahren zur Isolation von Seltenerden und einem von Seltenerden verschiedenen metallischen Nebenelement bzw. von Seltenerden verschiedenen metallischen Nebenelementen, die in der magnetischen Phase von Magneten oder davon herrührenden Produkten enthalten sind, umfassend mindestens die folgenden Schritte:
(i) Bereitstellen des Materials, das die magnetische Phase bildet, in Form eines entmagnetisierten Pulvers mit einer mittleren Teilchengröße von weniger als oder gleich 700 µm und frei von Verunreinigungen mit Teilchen, die keine Bestandteile der magnetischen Phase sind;
(ii) Lösen des Pulvers von Schritt (i) in saurem Medium, das mit mindestens einem Oxidationsmittel angereichert ist, das das metallische Nebenelement bzw. die metallischen Nebenelemente in einen Oxidationszustand versetzen kann, der mit dessen/deren anschließender Ausfällung in Schritt (iii) in Gegenwart von Hydroxidionen bei einem pH-Wert, der strikt unter 7 liegt, kompatibel ist;
(iii) Ausfällen des metallischen Nebenelements bzw. der metallischen Nebenelemente im Hydroxidzustand durch Zugabe einer wirksamen Menge mindestens einer hydroxylierten Base zu der am Ende von Schritt (ii) erhaltenen Lösung unter pH-Bedingungen, die begünstigen, dass die Seltenerdeelemente in solubilisierter Form gehalten werden;
(iv) Isolieren des am Ende von Schritt (iii) gebildeten Metallhydroxidniederschlags und gegebenenfalls dessen Gewinnung;
(v) Ausfällen der Seltenerdeelemente im Oxalatzustand aus der Lösung, die an metallischem Nebenelement bzw. metallischen Nebenelementen verarmt oder sogar frei davon ist und am Ende von Schritt (iv) erhalten wird, durch Zugabe einer wirksamen Menge an Oxalsäure zu der Lösung; und
(vi) Gewinnen der Seltenerden im Zustand eines Niederschlags von Seltenerdenoxalat.

2. Verfahren nach Anspruch 1, wobei das Pulver in Schritt (i) eine mittlere Teilchengröße von 10 bis 500 µm, insbesondere von weniger als oder gleich 200 µm, genauer gesagt weniger als 100 µm, insbesondere weniger als 50 µm und ganz besonders von etwa 30 µm aufweist.

3. Verfahren nach Anspruch 1 oder 2, wobei das oxidierende saure Medium von Schritt (ii) eine oder mehrere Säuren umfasst, ausgewählt aus der Gruppe, bestehend aus Salzsäure, Schwefelsäure und deren Gemisch.

4. Verfahren nach einem der vorhergehenden Ansprüche, wobei das Oxidationsmittel aus H₂O₂, NaS, NaClO und deren Gemischen ausgewählt ist.

5. Verfahren nach einem der vorhergehenden Ansprüche, wobei die in Schritt (iii) zugegebene hydroxylierte Base aus NaOH, NH₄OH, KOH und anderen organischen hydroxylierten Basen ausgewählt ist.

6. Verfahren nach einem der vorhergehenden Ansprüche, wobei der pH-Wert der Lösung in Schritt (iii) auf einen Wert strikt unter 7, insbesondere von 0,8 bis 7, vorzugsweise unter 5 und ganz besonders bevorzugt auf unter oder gleich 3 eingestellt wird.

7. Verfahren nach einem der vorhergehenden Ansprüche zur Isolation von Seltenerden und Eisen, insbesondere Neodym und Eisen, die insbesondere in der magnetischen Phase eines Magneten des Neodym-Eisen-Bor-Typs enthalten sind.

8. Verfahren nach dem vorhergehenden Anspruch, wobei das saure Medium in Schritt (ii) mit mindestens einem Oxidationsmittel, das Eisen in die Eisen(III)-Form oxidieren kann, insbesondere mit H₂O₂, angereichert wird.

9. Verfahren nach einem der Ansprüche 1 bis 6 zur Isolation von Seltenerden und Kobalt, insbesondere Samarium und Kobalt, die insbesondere in der magnetischen Phase eines Magneten des Samarium-Kobalt-Typs enthalten sind.

10. Verfahren nach dem vorhergehenden Anspruch, wobei das saure Medium in Schritt (ii) mit mindestens einem Oxidationsmittel, das Kobalt in die Kobalt(III)-Form oxidieren kann, insbesondere mit NaClO, angereichert wird.

11. Verfahren nach einem der vorhergehenden Ansprüche, das weiterhin vor Schritt (v) einen oder mehrere Schritt(e) des Waschens des in Schritt (iv) isolierten Metallhydroxidniederschlags und des Einbringens der Waschwasser in die am Ende von Schritt (iv) erhaltene Lösung, die an metallischem Nebenelement bzw. metallischen Nebenelementen verarmt oder sogar frei davon ist, umfasst.

12. Verfahren nach einem der vorhergehenden Ansprüche, wobei das Pulver von Schritt (i) aus einem magnetischen Material in massiver Form über eine Hydrierungs-Dehydrierungs-Behandlung erhalten wird.

13. Verfahren nach einem der vorhergehenden Ansprüche, wobei das Pulver von magnetischem Material in Schritt (i) aus einem magnetischen Produkt über mindestens die folgenden Schritte hergestellt wird:
(a) Bereitstellen des magnetischen Produkts, das von dem magnetischen Material in massiver Form und gegebenenfalls einer auf der Oberfläche des magnetischen Materials aufgebrachten Schutzbeschichtung des Typs einer Metalllegierung gebildet wird;
(b) falls nötig, Entmagnetisieren des zu behandelnden Materials, insbesondere durch Unterziehen einer thermischen Behandlung bei einer Temperatur unter 350°C;
(c) falls vorhanden, Aufbrechen der Schutzbeschichtung, insbesondere durch mechanische Zerkleinerung des Produkts;
(d) Vorantreiben der Zerkleinerung des magnetischen Materials in Form von Teilchen mit einer mittleren Größe von weniger als oder gleich 700 µm durch Aussetzen gegenüber einer Hydrierungs-Dehydrierungs-Behandlung; und
(e) Gewinnen des Pulvers, das von Teilchen gebildet wird, die aus der Zerkleinerung des magnetischen Materials herrühren, in einer Form, die von Fragmenten der Schutzbeschichtung isoliert ist, insbesondere durch Sieben.

14. Verwendung eines Verfahrens nach einem der Ansprüche 1 bis 13 zum Recyceln von Seltenerden, die in Magneten oder davon herrührenden Produkten enthalten sind.

## Claims

1. Process of use in isolating rare earth metals and ancillary metal element(s) distinct from rare earth metals present in the magnetic phase of magnets or derived products, comprising at least the stages consisting in:
(i) having the material forming said magnetic phase available in the form of a demagnetized powder, with a mean particle size of less than or equal to 700 µm, devoid of contamination with nonconstituent particles of said magnetic phase;
(ii) dissolving said powder from stage (i) in an acid medium supplemented with at least one oxidizing agent capable of adjusting the ancillary metal element(s) to an oxidation state compatible with their consecutive precipitation in stage (iii), in the presence of hydroxide ions, at a pH strictly of less than 7;
(iii) precipitating the ancillary metal element(s) in the hydroxide state via the addition, to said solution obtained on conclusion of stage (ii), of an effective amount of at least one hydroxylated base, under pH conditions favorable to the maintenance of the rare earth metal elements in the dissolved form;
(iv) isolating the metal hydroxide precipitate formed on conclusion of stage (iii) and, if appropriate, recovering it;
(v) precipitating the rare earth metal elements in the oxalate state from the solution depleted in, indeed even devoid of, ancillary metal element (s) and obtained on conclusion of stage (iv) via the addition, to said solution, of an effective amount of oxalic acid; and
(vi) recovering said rare earth metals in the form of a precipitate of rare earth metal oxalate.

2. Process according to Claim 1, in which the powder in stage (i) has a mean particle size ranging from 10 to 500 µm, in particular of less than or equal to 200 µm, more particularly of less than 100 µm, in particular of less than 50 µm and more particularly of approximately 30 µm.

3. Process according to Claim 1 or 2, in which said oxidizing acid medium of stage (ii) comprises one or more acids chosen from hydrochloric acid, sulfuric acid and their mixture.

4. Process according to any one of the preceding claims, in which said oxidizing agent is chosen from H₂O₂, NaS, NaClO, and their mixtures.

5. Process according to any one of the preceding claims, in which said hydroxylated base added in stage (iii) is chosen from NaOH, NH₄OH, KOH and other hydroxylated organic bases.

6. Process according to any one of the preceding claims, in which the pH of the solution is adjusted in stage (iii) to a value strictly of less than 7, in particular ranging from 0.8 to 7, preferably of less than 5 and more preferably of less than or equal to 3.

7. Process according to any one of the preceding claims, for isolating rare earth metals and iron, in particular neodymium and iron, present in particular in the magnetic phase of a magnet of Neodymium-Iron-Boron type.

8. Process according to the preceding claim, in which the acid medium in stage (ii) is supplemented with at least one oxidizing agent capable of oxidizing iron in the iron(III) form, in particular with H₂O₂.

9. Process according to any one of Claims 1 to 6, for isolating rare earth metals and cobalt, in particular samarium and cobalt, present in particular in the magnetic phase of a magnet of Samarium-Cobalt type.

10. Process according to the preceding claim, in which the acid medium in stage (ii) is supplemented with at least one oxidizing agent capable of oxidizing cobalt in the cobalt(III) form, in particular with NaClO.

11. Process according to any one of the preceding claims, comprising, prior to stage (v), one or more stage(s) of washing the metal hydroxide precipitate isolated in stage (iv) and of incorporation of the washing liquors in the solution depleted in, indeed even devoid of, ancillary metal element(s) obtained on conclusion of stage (iv).

12. Process according to any one of the preceding claims, in which the powder of stage (i) is obtained from a magnetic material in the bulk form via a hydridation-dehydridation treatment.

13. Process according to any one of the preceding claims, in which said magnetic material powder in stage (i) is formed from a magnetic product via at least the stages consisting in:
(a) having available magnetic product formed of the magnetic material in the bulk form and, if appropriate, of a protective coating of metal alloy type positioned at the surface of said magnetic material;
(b) if necessary, demagnetizing the material to be treated, in particular by exposure to a heat treatment at a temperature of less than 350°C;
(c) if existing, cracking said protective coating, in particular by mechanical shredding of the product;
(d) promoting the fragmentation of said magnetic material in the form of particles with a mean size of less than or equal to 700 µm by exposure to a hydridation-dehydridation treatment; and
(e) recovering the powder formed of the particles deriving from the fragmentation of the magnetic material, in a form isolated from the fragments of the protective coating, in particular by sieving.

14. Use of a process as defined according to any one of Claims 1 to 13 for the recycling of rare earth metals present in magnets or derived products.
